# EUROPÄISCHE PATENTANMELDUNG

(11) **EP 1 413 385 A2**
(43) Veröffentlichungstag der Anmeldung: **28.04.2004**
(21) Anmeldenummer: 03020252.7
(22) Anmeldetag: 08.09.2003
(51) Int. Cl.: B23K 37/047, B62D 65/00

(54) **Spannrahmen und Bearbeitungsstation mit Spannrahmen**

(30) Priorität: 24.10.2002 AT 16132002
(71) Anmelder: TMS Produktionssysteme GmbH, 4031 Linz (AT)
(72) Erfinder: Herac, Ibris, Prof., 4020 Linz (AT); Kallabis, Matthias, Dr., 4020 Linz (AT)
(74) Vertreter: VA TECH Patente GmbH & Co

(57) **Zusammenfassung**

Herkömmliche Bearbeitungsstationen zur Herstellung von Fahrzeugkarosserien verwenden eine Vielzahl von Spannrahmen, aufwendige Spannrahmenmagazine und komplizierte Spannrahmenwechselmechanismen, um die erforderliche Flexibilität bei der Herstellung von Fahrzeugkarosserien zu erreichen. Solche Bearbeitungsstationen weisen jedoch einen großen Flächenbedarf auf und sind darüber hinaus sehr teuer und konstruktiv aufwendig. Die vorliegende Erfindung zeigt nun eine Bearbeitungsstationen 1, die einfach, mit geringem Flächenbedarf und kostengünstig aufgebaut werden kann und trotzdem volle Funktionalität gewährleistet, indem der Spannrahmen 2 segmentiert ausgeführt wird, wobei zumindest ein Spannrahmensegment 3 relativ zum Spannrahmen 2 bewegbar am Spannrahmen 2 angeordnet ist.

## Beschreibung

Die vorliegende Anmeldung betrifft einen Spannrahmen, der als segmentierter Grundrahmen ausgeführt ist, sowie eine Bearbeitungsstation mit einem solchen Spannrahmen und einem Verfahren zur Durchführung eines Typenwechsels in einer Bearbeitungsstation.

Es gibt eine Vielzahl von Bearbeitungsstationen bei denen die zu bearbeitenden Bauteile mittels Spannrahmen in die Bearbeitungsstation zugeführt und gehalten werden. Als Beispiele für solche Stationen seien die EP 903 197 A1 oder EP 909 603 A1 bzw. DE 198 20 094 A1, DE 199 38 683 A1 und die WO 92/19486 A1 genannt, bei denen bei einem Wechsel des zu bearbeitenden Bauteiles jeweils der ganze Spannrahmen ausgewechselt werden muss. Die Spannrahmen befinden sich dabei in speziellen Magazinen. Es müssen also eine Vielzahl von unterschiedlichen Spannrahmen vorgesehen werden, die in platzaufwendigen Magazinen bis zu ihrem Einsatz gespeichert werden müssen. Weiters erfordern diese Anlagen komplizierte und aufwendige Spannrahmenwechseleinrichtungen, um einen schnellen Spannrahmenwechsel durchführen zu können. Da sich die Typen der zu bearbeitenden Bauteile oft nur geringfügig ändern, sind die unterschiedlichen Spannrahmen oft sehr ähnlich aufgebaut und großteils mit gleichen Vorrichtungen bestückt, wodurch viele Vorrichtungen mehrfach vorhanden sein müssen, obwohl immer nur ein kleiner Teil davon gleichzeitig zum Einsatz kommt. Alle diese genannten Nachteile wirken sich sehr negativ auf die Kosten und den benötigten Platzbedarf einer solchen Bearbeitungsstation aus.
Die DE 38 40 033 A1 zeigt eine Bearbeitungsstation mit einer reduzierten Anzahl von benötigten Spannrahmen. Hier wird ein Spanngrundrahmen mit Spann-, Schweiß- und Positioniermittel bestückt, während sich ein anderer Spannrahmen gerade in der Bearbeitungsstation im Einsatz befindet. Hier erspart man sich zwar die Spannrahmenmagazine, es müssen jedoch nach wie vor aufwendige Spannrahmenwechselmechanismen vorgesehen werden. Außerdem benötigt diese Anlage weiterhin sehr viel Platz, was wiederum die Kosten erheblich vergrößert.

Die gegenständliche Erfindung stellt sich deshalb die Aufgabe, die Anzahl der erforderlichen Spannrahmen, den erforderlichen Platzbedarf einer Bearbeitungsstation und die benötigte Zeit zur Durchführung eines Typenwechselns so weit wie möglich zu reduzieren, ohne an Flexibilität gegenüber bestehenden Lösungen zu verlieren.

Diese Aufgabe wird erfindungsgemäß dadurch gelöst, dass zumindest ein eine Anzahl von Spann-, Positionier und/oder Bearbeitungseinrichtungen aufweisendes Spannrahmensegment am Grundrahmen angeordnet ist und dass das Spannrahmensegment zumindest zwischen zwei Arbeitspositionen relativ zum Spannrahmen bewegbar angeordnet ist.
Der Spannrahmen oder Teile davon muss somit nicht mehr zeitaufwendig ausgewechselt werden, sondern kann durch einfaches Bewegen eines Spannrahmensegmentes umgestellt werden. Damit erreicht man eine Reduzierung der erforderlichen Spannrahmen, womit gleichzeitig natürlich auch die Größe gegebenenfalls benötigter Spannrahmensegmentmagazine verringert werden kann bzw. diese unter Umständen ganz eingespart werden können, aber auch eine Verkürzung von Umrüstzeiten, da ein Austausch des Spannrahmens zum Wechsel nicht mehr notwendig ist. Weiteres wird eine Handhabungseinrichtung nicht mehr durch einen Spannrahmenwechsel blockiert und kann folglich für andere Aufgaben eingesetzt werden.
Die Segmentierung des Spannrahmens erhöht auch die Flexibiliät des Spannrahmens entscheidend, da dieser durch die Gestaltungsmöglichkeiten der Spannrahmensegmente sehr variabel aufgebaut werden kann, d.h. dass praktisch überall am Spannrahmen ein drehbares Spannrahmensegment angeordnet werden kann.
Weiters entfällt oder verkleinert sich ein platzaufwendiges, teures Spannrahmenmagazin, was die Kosten einer erfindungsgemäßen Bearbeitungsstation wesentlich senkt. Außerdem kann der Grundrahmen auch nach der Einführung eines neuen Bauteiltyps weiterverwendet werden, indem lediglich die Spannrahmensegmente abgeändert werden, was ebenfalls hilft, die Kosten zu reduzieren.
Der segmentierte Aufbau des Spannrahmens ermöglicht außerdem die Standardisierung des Grundrahmens und der Spannsegmente.
Damit lässt sich ein Typenwechsel in der Bearbeitungsstation sehr einfach und effektiv abwickeln, da anstellte von ganzen, zum Teil großen und schweren Spannrahmen nur mehr bestimmte Spannrahmensegmente bewegt werden müssen.

Ganz besonders einfach kann der Spannrahmen gestaltet werden, wenn das bewegbare Spannrahmensegment verschwenkt, vorzugsweise verdreht, wird. Eine einfache Drehbewegung kann sehr leicht umgesetzt werden und es kann auch eine übergelagerte translatorische Bewegung, z.B. aufwendige Kulissensteuerungen, völlig verzichtet werden.

Sehr vorteilhaft wird das bewegbare Spannrahmensegment mit Spann-, Positionier und/oder Bearbeitungseinrichtungen zum Spannen, Positionieren und/oder Bearbeiten von zumindest zwei unterschiedlichen Bauteilen ausgeführt, womit ein Typenwechsel sehr effektiv durch Bewegen des Spannrahmensegmentes durchgeführt werden kann. Ein Typenwechsel kann somit sehr rasch durchgeführt werden, was die mögliche Taktzeit eines solchen Spannrahmen erhöht.

Um Zeit und Ressourcen einzusparen ist es vorteilhaft am Spannrahmen ein Antrieb vorzusehen, mit dem das bewegbare Spannrahmensegment bewegt wird, wodurch keine weiteren Hilfseinrichtungen zum Bewegen des Spannrahmensegmentes erforderlich sind, was die Kosten, den Platzbedarf und die Umrüstzeiten weiter verringert.

Die Flexibilität des Spannrahmens wird zusätzlich erhöht, wenn das bewegbare Spannrahmensegment auswechselbar ausgeführt ist. Damit kann der Spannrahmen für eine noch größerer Anzahl von Typen eingesetzt werden und auch dann noch wenn sich die zu bearbeitenden Bauteile gänzlich ändern sollten. Der Spannrahmen wird dadurch in einem größerem Maß wiederverwendbar.
Eine weitere Verbesserung der Flexibilität ergibt sich, wenn zumindest ein weiteres Spannrahmensegment des Spannrahmens auswechselbar ist. Der Spannrahmen kann auf diese Weise äußerst flexibel gestaltet werden.

Eine ganz besonders vorteilhafte Ausführungsvariante ergibt sich, wenn die Bearbeitungseinrichtungen Schweißeinrichtungen, beispielsweise Laserschweiß-, Plasmaschweiß- oder Widerstandspunktschweißeinrichtungen, sind. Alternativ dazu können auch mechanische Fügeeinrichtungen, beispielsweise Stanzniet- oder Clincheinrichtungen, vorgesehen sein. Solche Schweißeinrichtungen bzw. Fügeeinrichtungen können sehr kompakt ausgeführt werden und lassen sich deshalb sehr vorteilhaft in die Spannrahmensegmente integrieren, wodurch die notwendige Kompaktheit der Spannrahmensegmente problemlos erreicht werden kann.
Für den Fall einer Laserschweißeinrichtung kann die gesamte Station darüber hinaus ohne großen Aufwand von der Umwelt abgekapselt werden, um die notwendigen Sicherheitsvorschriften zu erfüllen, da die gesamte erfindungsgemäße Station sehr kompakt gebaut werden kann.

Vorteilhaft wird ein erfindungsgemäßer Spannrahmen in einer Bearbeitungsstation eingesetzt. Dadurch wird nur mehr ein einziger Spannrahmen bzw. Grundrahmen pro Seite benötigt, der je nach Bedarf unterschiedlich aufgebaut wird. Ändert sich der zu bearbeitende Bauteil nur geringfügig, muss nicht mehr der gesamte Spannrahmen ausgewechselt werden, sondern nur mehr das betroffene Segment verdreht werden bzw. ausgetauscht werden, was eine große Einsparung hinsichtlich der erforderlichen Anzahl der Spann-, Positionier- bzw. Bearbeitungseinrichtungen mit sich bringt, da nicht mehr eine Mehrzahl von Spannrahmen mit gleichen Einrichtungen ausgestattet sein muss. Der Platzbedarf einer solchen Bearbeitungsstation kann damit wesentlich reduziert werden.

Eine besonders flexible und besonders einfache Ausführungsvariante ergibt sich, wenn die Spannrahmensegmente mittels zumindest einer Handhabungseinrichtung, vorzugsweise ein Roboter, in die Grundrahmen eingesetzt werden.

Um ausreichend Platz zum Bestücken der Grundrahmen zu haben, ist es vorteilhaft, diese zum Einsetzen der Spannrahmensegmente in eine Einsetzposition zu verfahren und während dem Einsetzen der Spannrahmensegmente ortsfest zu halten. Damit schafft man gleichzeitig auch in der Bearbeitungsstation mehr Platz um eventuell notwendige Umrüstarbeiten durchzuführen.

Das Zuführen von Bauteilen in die Bearbeitungsstation wird wesentlich erleichtert, wenn die Grundrahmen zum Zuführen von Bauteilen in den Spannrahmen und/oder der Bearbeitungsstation in eine Zuführposition verfahrbar sind und nach dem Zuführen wieder in eine Arbeitsposition in der Bearbeitungsstation verfahrbar sind.

Ist darüber hinaus die Zuführposition gleich der Einsetzposition, kann die Bearbeitungsstation noch kompakter ausgeführt werden. Darüber hinaus verringern sich dadurch auch die Verfahrwege und natürlich die Verfahrzeiten, wodurch auch Taktzeit eingespart werden kann.

Die Bauteile können in der Bearbeitungsstation sehr sicher gespannt und positioniert werden, wenn die Grundrahmen während dem Fügevorgang in der Bearbeitungsstation ortsfest angeordnet sind.

Wenn in Reichweite der Handhabungseinrichtung zumindest ein Spannrahmensegmentmagazin, welches mehrere Spannrahmensegmente enthält, angeordnet ist, kann die Bearbeitungsstation besonders kompakt mit geringem Flächenbedarf ausgeführt werden, da unnötige Verfahrwege vermieden werden und eine stationäre Handhabungseinrichtung ausreicht, um alle benötigten Segmente zu erreichen. Dies wirkt sich wiederum sehr positiv auf die Kosten und den Platzbedarf der Bearbeitungsstation aus.
Kann mit dem Spannrahmensegment ein Bauteil aufgegriffen werden und das Spannrahmensegment gemeinsam mit dem Bauteil mittels der Handhabungseinrichtung in den Grundrahmen eingesetzt werden, vereinfacht sich der Aufbau der Bearbeitungsstation noch weiter, da auch eine Bauteilzuführvorrichtung entfallen kann, was sich sowohl auf den erforderlichen Flächenbedarf, als auch auf die Kosten positiv auswirkt.

Die erfindungsgemäße Bearbeitungsstation kann ganz besonders effektiv betrieben werden, wenn mit der Handhabungseinrichtung nach dem Einsetzen der Spannrahmensegmente in die Grundrahmen Bearbeitungseinrichtungen greifbar sind und damit die Fahrzeugkarosserien bearbeitbar sind oder mit der Handhabungseinrichtung nach und/oder während dem Einsetzen der Spannrahmensegmente in die Grundrahmen Bauteile in die Bearbeitungsstation zuführbar sind, da dann die Handhabungseinrichtung durchgängig eingesetzt werden kann und es zu keinen Totzeiten kommt.

Der Aufbau der Bearbeitungsstation wird weiter vereinfacht, wenn die Spannrahmensegmente über den Grundrahmen mit Energie und notwendigen Medien versorgt werden. Dies ermöglicht einheitliche Kupplungen für Energie und andere Medien, was zu einer weiteren Standardisierung und Vereinfachung beiträgt. Außerdem reicht dann eine zentrale Energie- und Medienversorgung der Grundrahmens, beispielsweise über eine zentrale Kupplung, aus.

Eine sehr vorteilhafte Verwendung einer erfindungsgemäßen Bearbeitungsstation findet sich in einer Karosseriefertigungsstraße, bestehend aus einer Mehrzahl solcher aufeinanderfolgender Bearbeitungsstationen, in der Fahrzeugkarosserien und/oder Untergruppen von Fahrzeugkarosserien gefügt, vorzugsweise geschweißt, werden.

Die vorliegende Erfindung wird anhand der beispielhaften, nicht einschränkenden Figuren 1 bis 3 beschrieben. Es zeigt
Fig. 1 und 2 zwei Seitenansichten einer Bearbeitungsstation mit einem erfindungsgemäßen Spannrahmen,
Fig. 3 eine Detailansicht eines Ausschnittes eines erfindungsgemäßen Spannrahmen von oben und
Fig. 4 eine dreidimensionale Ansicht einer Bearbeitungsstation mit einem erfindungsgemäßen Spannrahmen.

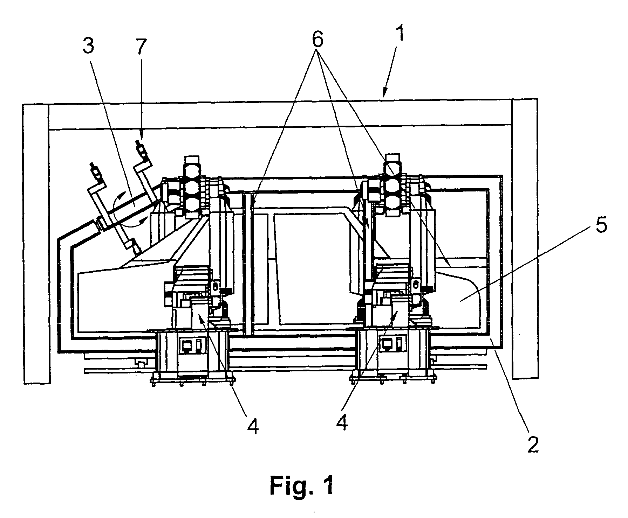

Fig. 1 zeigt eine Seitenansicht einer Bearbeitungsstation 1, in der ein Bauteil 5, hier eine Fahrzeugkarosserie, durch Handhabungseinrichtungen 4 bearbeitet, z.B. gefügt, vorzugsweise verschweißt, wird. Die zu fügenden Bauteile 5 werden dabei durch einen Spannrahmen 2 in Position gehalten und gespannt, sodass die Bauteile eine definierte Lage zueinander einnehmen und gefügt werden können. Der Spannrahmen 2 besteht dabei aus einem Grundrahmen, in dem eine Anzahl von Spannrahmensegmente 6 angeordnet sind. Diese Spannrahmensegmente 6 sind auswechselbar, d.h. zumindest ein Spannrahmensegment 6 kann von Grundrahmen entfernt und durch ein anderes Spannrahmensegment 6 ersetzt werden. Die Spannrahmensegmente 6 weisen eine Anzahl von hier nicht dargestellten Positionier-, Spann- und/oder Bearbeitungseinrichtungen 7 auf, mit denen die Bauteile 5 positioniert, gespannt und/oder gefügt werden können. Die Bearbeitungseinrichtungen könnten z.B. Schweißeinrichtungen, beispielsweise Laser- oder Plasma-Schweißköpfe, sein, die klein genug sind, um in die Positionier-, Spann- und/oder Bearbeitungseinrichtungen 7 integriert werden zu können. Die Bearbeitungseinrichtungen könnten dabei z.B. direkt in die Spanneinrichtungen integriert werden. Ändert sich nur ein Teil einer Karosserie, so reicht es aus, nur ein oder mehrere Spannrahmensegmente 6 zu tauschen, anstatt den gesamten Spannrahmen auszuwechseln.

Weiters weist der Spannrahmen 2 ein relativ zum Spannrahmen 2 bewegbares, hier ein um eine Drehachse drehbares, Spannrahmensegment 3 auf, welches um eine Drehachse verdrehbar (durch Pfeil in Fig. 1 angedeutet) am Grundrahmen angeordnet ist. In diesem Beispiel befindet sich das drehbare Spannrahmensegment 3 im Grundrahmen eingesetzt. Das drehbare Spannrahmensegment 3 ist ebenfalls mit einer Anzahl von Positionier-, Spann- und/oder Bearbeitungseinrichtungen 7 ausgestattet. Das drehbare Spannrahmensegment 3 besitzt nun aber zumindest zwei Gruppen von zusammengehörigen Positionier-, Spann- und/oder Bearbeitungseinrichtungen 7, die durch entsprechendes Drehen des drehbaren Spannrahmensegmentes 3 zwischen zwei Arbeitspositionen bewegt werden können. In diesem Beispiel gibt es zwei solche um 180° versetzt angeordnete Gruppen von Positionier-, Spann- und/oder Bearbeitungseinrichtungen 7, d.h. um die Gruppe zu wechseln ist eine Drehung um 180° erforderlich. Damit muss das Spannrahmensegment bei einem Typenwechsel nicht ausgetauscht werden, sondern die Anpassung kann durch einfaches Verdrehen des drehbaren Spannrahmensegmentes 3 erzielt werden, was sehr einfach und rasch erfolgen kann. Der Spannrahmen 2 kann dabei ortsfest gehalten werden.
Das drehbare Spannrahmensegment 3 weist dazu vorteilhaft einen hier nicht dargestellten eigenen Antrieb auf, mit dem das Verdrehen eigenständig, ohne äußere Eingriffe, durchgeführt werden kann. Das drehbare Spannrahmensegment 3 sollte darüber hinaus auch eine hier ebenfalls nicht dargestellte Arretiereinrichtung besitzen, mit der es in einer bestimmten Lage sicher arretiert werden kann und eine exakte Ausrichtung des drehbaren Spannrahmensegmentes 3 sichergestellt ist. Eine einfache Arretiereinrichtung könnte z.B. ein Bolzen sein, der in einer zugeordneten Bohrung einrastet.
Natürlich wäre es auch denkbar für das drehbare Spannrahmensegment 3 keinen eigenen Antrieb vorzusehen, sondern das Verdrehen könnten auch durch externe Einrichtungen, wie z.B. den vorhandenen Handhabungseinrichtungen 4, erfolgen.
Grundsätzlich könnte natürlich jedes andere Spannrahmensegment 6 analog wie oben beschrieben ebenfalls drehbar angeordnet werden. Gleichfalls könnte das drehbare Spannrahmensegment 3 natürlich auch, mit oder ohne Antrieb, auswechselbar angeordnet sein, um so die bearbeitbare Typenanzahl noch weiter zu erhöhen.
Der Spannrahmen 2 muss auch nicht unbedingt mehrere Spannrahmensegmente 6 aufweisen, sonder könnte genau so gut nur ein einziges drehbares Spannrahmensegment 3 aufweisen.

Das bewegbare Spannrahmensegment 3 kann im Rahmen der Erfindung selbstverständlich beliebig zwischen den Arbeitspositionen des Spannrahmensegmentes 3 bewegt werden. Insbesondere ist jede translatorische und/oder rotatorische Bewegung denkbar, wobei eine Drehung um eine Drehachse eine sehr einfache Bewegung darstellt und daher bevorzugt eingesetzt wird.

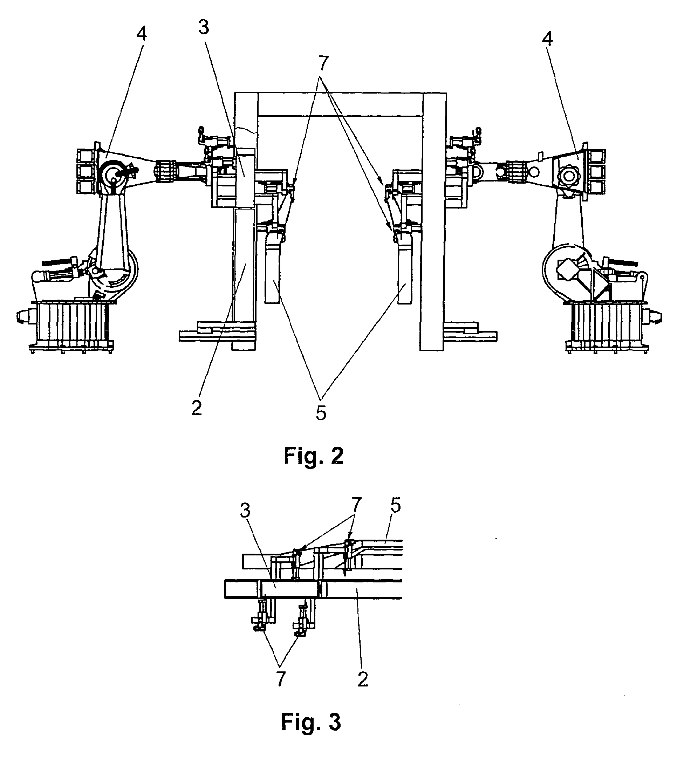

In Fig. 2 ist nun eine Seitenansicht einer solchen Bearbeitungsstation 1 dargestellt, in der man erkennt, dass zu jeder Seite der Bearbeitungsstation 1 ein Spannrahmen 2 mit jeweils einem drehbaren Spannrahmensegment 3 angeordnet ist, der einen Bauteil 5 positioniert, spannt und gegebenenfalls auch bearbeitet. Man erkennt weiters, dass sich eine Gruppe von Positionier-, Spann- und/oder Bearbeitungseinrichtungen 7 in einer Arbeitsposition im Einsatz am zu bearbeitenden Bauteil 5 befindet, während die andere in einem sicheren Abstand dazu angeordnet ist. Durch eine Drehung um 180° würde sich die Arbeitsposition entsprechend umkehren. Außerdem ist erkennbar, dass die Positionier-, Spann- und/oder Bearbeitungseinrichtungen 7 bezüglich des Spannrahmens 2 auch seitlich versetzt angeordnet sein können, da der Spannrahmen 2 im den meisten Fällen nicht bis an die Bauteile 5 herangefahren wird, sondern in einem vorgegebenen Abstand dazu angeordnet ist. Durch die versetzt Lage benötigt der drehbare Spannrahmensegment 3 natürlich etwas mehr Platz zum Verdrehen.
Die Fig. 3 zeigt eine Detailansicht eines drehbaren Spannrahmensegmentes 3 von oben, wobei man wieder die versetzte Lage der Positionier-, Spann- und/oder Bearbeitungseinrichtungen 7 erkennt.

Ganz allgemein ist beim Bewegen des bewegbaren Spannrahmensegmentes 3 darauf zu achten, dass der Bewegungsbereich während des Bewegens frei gehalten wird, um eine mögliche Kollision mit anderen Konstruktionsteilen oder Einrichtungen zu vermeiden.

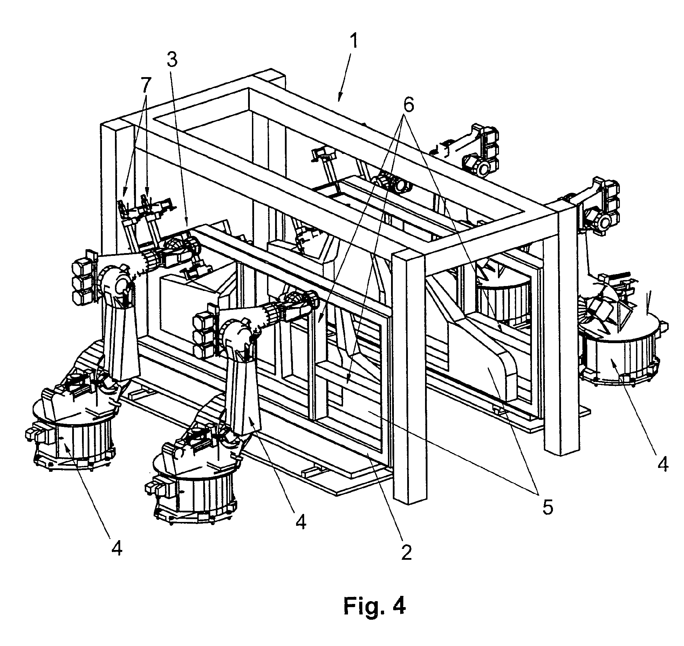

Die Fig. 4 zeigt nun eine dreidimensionale Ansicht einer erfindungsgemäßen Bearbeitungsstation 1. Zu jeder Seite der Bearbeitungsstation 1 sind hier zwei Handhabungseinrichtungen 4, hier Roboter, angeordnet, die das entsprechende Werkzeug, z.B. Schweißeinrichtungen, zum Bearbeiten der Bauteil 5 tragen. Der Spannrahmen 2 weist wiederum mehrere Spannrahmensegmente 6 und jeweils ein drehbares Spannrahmensegment 3 auf, wie bereits weiter oben beschrieben.

Im Arbeitsbereich der Roboter 4 befinden sich vorteilhaft, hier nicht dargestellte, Spannrahmensegmentmagazine und/oder Werkzeugmagazine, damit bei Bedarf die Spannrahmensegmente 3, 6 und/oder die Werkzeuge sehr rasch und einfach gewechselt werden können. Solche Magazine können dabei beliebig, z.B. als Drehmagazin oder als Hochregalmagazin, ausgeführt sein.

Selbstverständlich ist es aber auch möglich bei Bedarf den gesamten Spannrahmen 2 zu wechseln. Dazu gibt es auch eine Vielzahl von bekannten Möglichkeiten und Spannrahmenmagazine, die hier nicht im Einzelnen aufgeführt werden. Beispiele solcher Spannrahmenwechselmethoden und -magazine finden sich z.B. in der EP 903 197 A1, der EP 909 603 A1 und der EP 1 172 170 A1 der Anmelderin.

Die Energieversorgung der Spannrahmen 2 und der Positionier-, Spann- und/oder Bearbeitungseinrichtungen 7 erfolgt vorteilhaft zentral, beispielsweise über eine geeignete Energiekupplung, über eine bekannte hier nicht dargestellt Energieversorgungseinrichtung, die dem Spannrahmen 2 alle benötigten Medien, wie z.B. Strom, Wasser, Schweißgas, Laserstrahlen, Druckluft, etc., zuführt. Selbstverständlich könnten aber auch beliebige andere Energieversorgungen vorgesehen werden.

In einer Fertigungsstraße kommen in der Regel eine Mehrzahl solcher Bearbeitungsstationen zum Einsatz, wobei durch den Einsatz solcher erfindungsgemäßer Spannrahmen, der erforderliche Flächenbedarf der Bearbeitungsstationen und der gesamten Fertigungsstraße erheblich reduziert werden kann.

## Patentansprüche

1. Spannrahmen, der als segmentierter Grundrahmen ausgeführt ist, **dadurch gekennzeichnet, dass** zumindest ein eine Anzahl von Spann-, Positionier und/oder Bearbeitungseinrichtungen (7) aufweisendes Spannrahmensegment (3) am Grundrahmen angeordnet ist und dass das Spannrahmensegment (3) zumindest zwischen zwei Arbeitspositionen relativ zum Spannrahmen (2) bewegbar angeordnet ist.

2. Spannrahmen nach Anspruch 1, **dadurch gekennzeichnet, dass** das Spannrahmensegment (3) verschwenkbar, vorzugsweise um zumindest eine Drehachse drehbar, angeordnet ist.

3. Spannrahmen nach Anspruch 1 oder 2, **dadurch gekennzeichnet, dass** das bewegbare Spannrahmensegment (3) mit Spann-, Positionier und/oder Bearbeitungseinrichtungen (7) zum Spannen, Positionieren und/oder Bearbeiten von zumindest zwei unterschiedlichen Bauteilen (5) ausgeführt ist.

4. Spannrahmen nach Anspruch 3, **dadurch gekennzeichnet, dass** am Spannrahmen (2) ein Antrieb vorgesehen ist, mit dem das bewegbar gelagerte Spannrahmensegment (3) bewegbar ist.

5. Spannrahmen nach einem der Ansprüche 1 bis 4, **dadurch gekennzeichnet, dass** das bewegbare Spannrahmensegment (3) lösbar und auswechselbar am Spannrahmen (2) angeordnet ist.

6. Spannrahmen nach einem der Ansprüche 1 bis 5, **dadurch gekennzeichnet, dass** zumindest ein weiteres Spannrahmensegment (6) lösbar und auswechselbar am Spannrahmen (2) angeordnet ist.

7. Spannrahmen nach einem der Ansprüche 1 bis 5, **dadurch gekennzeichnet, dass** der Spannrahmen (2) durch Bewegen des bewegbaren Spannrahmensegmentes (3) und/oder durch das Auswechseln eines Spannrahmensegmentes (3, 6) an einen anderen zu bearbeitenden Bauteil (5) anpassbar ist.

8. Spannrahmen nach einem der Ansprüche 1 bis 7, **dadurch gekennzeichnet, dass** eine Anzahl von Bearbeitungseinrichtungen Schweißeinrichtungen, beispielsweise Laserschweiß-, Plasmaschweiß- oder Widerstandspunktschweißeinrichtungen, sind.

9. Spannrahmen nach einem der Ansprüche 1 bis 8, **dadurch gekennzeichnet, dass** eine Anzahl von Bearbeitungseinrichtungen mechanische Fügeeinrichtungen, beispielsweise Stanzniet- oder Clincheinrichtungen, sind.

10. Bearbeitungsstation, vorzugsweise eine Schweißstation, zum Fügen von Bauteilen, vorzugsweise Konstruktionen aus Blechen, wie beispielsweise Fahrzeugkarosserien, mit zumindest einem Spannrahmen (2), wobei zumindest ein Spannrahmen (2) nach einem der Ansprüche 1 bis 9 ausgeführt ist.

11. Bearbeitungsstation nach Anspruch 10, **dadurch gekennzeichnet, dass** eine Handhabungseinrichtung (4), vorzugsweise ein Roboter, vorgesehen ist, die zum Einsetzen eines Spannrahmensegmentes (6) in den Spannrahmen (2) ausgeführt ist.

12. Bearbeitungsstation nach Anspruch 10 oder 11, **dadurch gekennzeichnet, dass** der Spannrahmen (2) in der Bearbeitungsstation (1) zwischen einer Einsetzposition und/oder einer Zuführposition und/oder einer Arbeitsposition verfahrbar angeordnet sind.

13. Bearbeitungsstation nach Anspruch 12, **dadurch gekennzeichnet, dass** der Spannrahmen (2) während dem Einsetzen der Spannrahmensegmente (6) in der Einsetzposition ortsfest angeordnet ist.

14. Bearbeitungsstation nach Anspruch 12 oder 13, **dadurch gekennzeichnet, dass** Einrichtungen vorgesehen sind, mittels denen Bauteile in den Spannrahmen (2) und/oder der Bearbeitungsstation (1) zuführbar sind, während sich der Spannrahmen (2) in der Zuführposition befindet.

15. Bearbeitungsstation nach einem der Ansprüche 12 bis 14, **dadurch gekennzeichnet, dass** die Zuführposition gleich der Einsetzposition ist.

16. Bearbeitungsstation nach einem der Ansprüche 10 bis 15, **dadurch gekennzeichnet, dass** die Spannrahmen (2) während dem Fügevorgang in der Bearbeitungsstation (1) ortsfest angeordnet sind.

17. Bearbeitungsstation nach einem der Ansprüche 11 bis 16, **dadurch gekennzeichnet, dass** in Reichweite der Handhabungseinrichtung (5) zumindest ein Spannrahmensegmentmagazin, welches eine Mehrzahl von Spannrahmensegmente (3, 6) enthält, angeordnet ist.

18. Bearbeitungsstation nach einem der Ansprüche 11 bis 17, **dadurch gekennzeichnet, dass** ein Spannrahmensegment (3, 6) mit einem Mittel zum Greifen eines Bauteiles (5) ausgeführt ist und das Spannrahmensegment (3, 6) gemeinsam mit dem Bauteil (5) mittels der Handhabungseinrichtung (4) in den Spannrahmen (2) einsetzbar ist.

19. Bearbeitungsstation nach einem der Ansprüche 11 bis 18, **dadurch gekennzeichnet, dass** die Handhabungseinrichtung (4) zum Greifen von Bearbeitungseinrichtungen, vorzugsweise Schweißeinrichtungen, ausgeführt ist, mittels denen nach und/oder während dem Einsetzen und/oder dem Verdrehen der Spannrahmensegmente (3, 6) in die Spannrahmen (2) die Bauteile (5), vorzugsweise Fahrzeugkarosserien, bearbeitbar sind.

20. Bearbeitungsstation nach einem der Ansprüche 11 bis 19, **dadurch gekennzeichnet, dass** die Handhabungseinrichtung (5) zum Zuführen von Bauteilen (5) in die Bearbeitungsstation (1) und/oder den Spannrahmen (2) vor, nach und/oder während dem Einsetzen der Spannrahmensegmente (3, 6) in die Grundrahmen (3) und/oder dem Verdrehen der drehbaren Spannrahmensegmente (3) ausgeführt ist.

21. Bearbeitungsstation nach einem der Ansprüche 10 bis 20, **dadurch gekennzeichnet, dass** eine Energieversorgungseinrichtung zum Versorgen der Spannrahmensegmente (3, 6), vorzugsweise über den Spannrahmen (2), mit Energie und notwendigen Medien, wie beispielsweise Wasser, Strom, Druckluft, Laser oder Schweißgas, vorgesehen ist.

22. Karosseriefertigungsstraße bestehend aus einer Mehrzahl aufeinanderfolgender Bearbeitungsstationen (1), wobei zumindest eine der Bearbeitungsstationen (1) nach einem der Ansprüche 10 bis 21 ausgebildet ist.

23. Karosseriefertigungsstraße nach Anspruch 22, **dadurch gekennzeichnet, dass** Fahrzeugkarosserien und/oder Untergruppen von Fahrzeugkarosserien fügbar sind.

24. Verfahren zur Durchführung eines Typenwechsels in einer Bearbeitungsstation (1), vorzugsweise eine Schweißstation, in welcher Bauteile, vorzugsweise Konstruktionen aus Blechen, wie beispielsweise Fahrzeugkarosserien, mit Hilfe zumindest eines segmentierten Spannrahmens (2) gefügt werden, **dadurch gekennzeichnet, dass** der segmentierte Spannrahmen (2) durch Bewegen zumindest eines bewegbaren, eine Anzahl von Spann-, Positionier- und/oder Bearbeitungseinrichtungen (7) aufweisenden Spannrahmensegmentes (3) relativ zum Spannrahmen (2) auf die neue Type umgestellt wird.

25. Verfahren nach Anspruch 24, **dadurch gekennzeichnet, dass** das bewegbare Spannrahmensegment (3) verschwenkt, vorzugsweise um zumindest eine Drehachse verdreht, wird.

26. Verfahren nach Anspruch 24 oder 25, **dadurch gekennzeichnet, dass** zumindest ein Spannrahmensegment (3, 6), welches eine Anzahl von Spann-, Positionier- und/oder Bearbeitungseinrichtungen (7) aufweist, vom Spannrahmen (2) gelöst und ausgewechselt wird.

27. Verfahren nach Anspruch 26, **dadurch gekennzeichnet, dass** das Spannrahmensegment (3, 6) mittels einer Handhabungseinrichtung (4), vorzugsweise ein Roboter, ausgewechselt wird.
